# FASCICULE DE BREVET EUROPEEN

(11) **EP 0 880 449 B1**
(45) Date de publication et mention de la délivrance du brevet: **02.02.2000**
(21) Numéro de dépôt: 97907125.5
(22) Date de dépôt: 24.02.1997
(51) Int. Cl.: B62H 3/04

(54) **DISPOSITIF DE MAINTIEN D'UNE BICYCLETTE EN STATIONNEMENT COMPORTANT UN ANTI-VOL**
STÜTZVORRICHTUNG ZUR STATIONÄREN AUFRECHTERHALTUNG EINES FAHRRADES MIT DIEBSTAHLSICHERUNG
BICYCLE PARKING APPARATUS WITH AN ANTI-THEFT DEVICE

(30) Priorité: 23.02.1996 FR 9602226
(43) Date de publication de la demande: 02.12.1998
(73) Titulaire: Daudet, Guy, 92300 Levallois (FR)
(72) Inventeur: Daudet, Guy, 92300 Levallois (FR)
(86) Numéro de dépôt international: FR9700330
(87) Numéro de publication internationale: WO9730884

(56) Documents cités:
- WO-A-86/02896
- DE-U- 8 528 115
- DE-U- 9 304 861
- DE-U- 9 409 746
- US-A- 3 762 569

## Description

La présente invention concerne un dispositif de maintien d'une bicyclette en stationnement comportant un anti-vol emprisonnant les roues et le cadre, et dont l'utilisation nécessite uniquement l'emploi d'un anti-vol standard pour bicyclettes en forme de U ou à boucle ou d'un cadenas standard à anse.

Dans la pratique, on attache la bicyclette à un point fixe ( range vélos, grille, poteau de signalisation...) à l'aide d'un anti-vol classique ( U, câble à boucle..).
Ce mode de protection contre le vol a l'inconvénient de n'emprisonner que le cadre et l'une des roues dans le meilleur des cas. L'emprisonnement de l'autre roue sur le cadre par exemple nécessite un deuxième anti-vol.
Des locaux sont quelquefois mis à la disposition des cyclistes avec portes fermées, d'où la nécessité de posséder une clé.

L'expérience prouve:
- que la probabilité de se faire voler sa bicyclette ou partie de celle-ci est presque totale,
- qu'il existe une difficulté certaine pour trouver un point d'ancrage,
- quel'on apprécie pas de stationner sa bicyclette n'importe où,
- que cela provoque la dégradation de la peinture,
- qu'il y a un effet de frustration, car il y a une relation cycliste vélo très "affective",
- que cela nuit à l'esthétique de l'environnement.

Tous ces inconvénients sont une entrave au développement de ce mode de transport.

Le dispositif de stationnement avec anti-vol selon l'invention permet de remédier à ces inconvénients, et est défini par les caractéristiques de la revendication 1.

On connaît le document DE 8 528 115 8 (REINHOLD) du 16.1.1986 qui présente un dispositif qui vise à résoudre le problème précité.
Ce dispositif a la particularité de n'emprisonner dans le meilleur des cas qu'une roue (arrière) et le cadre de la bicyclette.

La désolidarisation de la roue avant par simple dégonflage peut entraîner le basculement du vélo vers l'avant, entraînant ainsi son dégagement complet de la pièce d'emprisonnement (301).Le dispositif n'ayant plus la moindre fonctionnalité objective.

En revanche, le dispositif présenté pour le maintien de la bicyclette en stationnement comporte un anti-vol caractérisé en ce qu'il comprte:
- un moyen d'emprisonnement de la roue avant contribuant également à l'emprisonnement de la roue arrière,
- un moyen d'emprisonnement du cadre du vélo quelle que soit sa hauteur qui coiffe une barre principale du cadre quelle que soit son inclinaison. Le dit moyen d'emprisonnement étant verrouillé par un anti-vol.

Le vélo est immobilisé au sol dans sa position normale de stationnement avec l'impossibilité d'un déplacement en tous sens et en rotation autour de la barre principale du cadre.

L'ensemble contribue à l'emprisonnement des deux roues même désolidarisées de leur point de fixation respectif.

Un unique anti-vol lors d'une seule manipulation suffit pour immobiliser la totalité de la bicyclette.

Il comporte en effet selon une première caractéristique, un poteau-glissière fixé sur le sol contre lequel on vient appuyer la bicyclette.

Sur ce poteau, côté sol, est fixé une barre de crochetage de forme adéquate, dans laquelle on place la roue avant du vélo. La roue avant est positionnée de telle façon, que sa partie arrière (jante et pneu) est placée à l'intérieur de la barre. Deux variantes, avec la même fonction que la barre de crochetage précitée sont réalisables:
1. une pièce de forme adaptée permettant de loger la roue avant sur sa partie située côté sol, en dessous du moyeu.
2. une saignée aménagée dans la chaussée, permettant de loger la roue avant sur sa partie située côté sol, en dessous du moyeu.

Dans tous les cas, la bicyclette est ainsi stationnée dans sa position normale d'usage.

Un bras coulissant muni d'une p!èce d'emprisonnement de forme adéquate, articulée, réglable en fonction de la hauteur de la bicyclette vient emprisonner une barre principale du cadre.
Cet emprisonnement empêche le déplacement de la bicyclette.

Le dit bras coulisse dans ou sur le poteau-glissière placé sur le côté gauche ou droit de la bicyclette.

Ce poteau peut être fixé directement dans le sol ou sur une platine elle-même fixée dans le sol ou autres moyens.

De plus, ce poteau-glissière empêche l'extraction latérale gauche ou droite et/ou arrière de la roue arrière, selon qu'il est placé à gauche ou à droite du vélo, par le blocage en rotation bas haut de la bicyclette.

L'emprisonnement du cadre et des roues est rendu total par l'introduction de part en part de la anse d'un U standard anti-vol pour cycles ou anti-vol flexible à boucle, ou un cadenas à anse, dans des trous aménagés à la base de la pièce d'emprisonnement,ou en un autre lieu approprié et dans le poteau-glissière fixe.

L'emprisonnement de la roue avant, même inopinément désolidarisée de la fourche est réalisée par son crochetage sur sa partie arrière dans la barre de crochetage.
En effet, l'extraction de la roue par l'avant de la fourche du vélo est rendue impossible, car la face de la jante côté rayons bute contre la face intérieure de l'avant de la barre précité.

De plus, la roue avant ne peut être extraite par l'arrière de la fourche du vélo, car les rayons butent contre la face extérieure de l'avant de la barre de crochetage.

Les deux autres systèmes: la pièce de forme adaptée, la saignée dans le sol, ne permettent pas, non plus, l'extraction de la roue avant vers l'avant ou l'arrière de la fourche compte tenu, que la cote entre l'extrémité avant ou arrière de la pièce de forme adaptée ou de la saignée dans le sol et la face intérieure de la fourche au droit du passage de la roue, est inférieure au diamètre de la roue.

D'autre part , en cas de désolidarisation de la roue avant, son maintien dans la fourche du vélo et dans la barre de crochetage, ou la pièce de forme adaptée, ou saignée dans le sol limite la rotation latérale du vélo du bas vers le haut empêchant ainsi l'extraction latérale droite ou gauche et/ou arrière de la roue arrière, ainsi que l'extraction latérale gauche ou droite de la roue avant.

Il existe actuellement sur le marché plusieurs modèles de bicyclettes selon l'inclinaison des barres principales du cadre.

Pour obtenir un emprisonnement satisfaisant d'une barre du cadre par la pièce d'emprisonnement dans tous les modèles , il est prévu une articulation sur le bras couvrant ainsi toutes les inclinaisons des barres.

Selon des modes particuliers de réalisation:
- le poteau-glissière sert à:
   . maintenir la bicyclette en position normale (debout),
   . empêcher l'extraction latérale gauche ou droite(selon qu'il est placé à gauche ou droite du vélo) et/ou arrière de la roue arrière par le blocage en rotation de la bicyclette prenant appui sur le dit poteau-glissière, en cas de désolidarisation roue avant fourche.
- la barre de crochetage, ou
- la pièce de forme adaptée, ou
- la saignée dans le sol servent respectivement à:
   . maintenir la bicyclette en position normale,
   . empêcher l'extraction de la roue avant par l'avant ou par l'arrière de la fourche avant du vélo,
   . empêcher l'extraction latérale droite ou gauche de la roue avant,
   . empêcher l'extraction latérale et/ou arrière de la roue arrière par limitation de l'inclinaison bas haut de la bicyclette.
- le bras coulissant est réglable en hauteur s'adaptant ainsi à toutes les hauteurs de bicyclettes,
- la pièce d'emprisonnement est articulée s'adaptant ainsi à toutes les inclinaisons des barres principales du cadre,
- la pièce d'emprisonnement peut être équipée d'une poignée pour faciliter son positionnement sur la barre du cadre,
- la face intérieure de la pièce d'emprisonnement peut être recouverte d'un matériau souple, anti-dérapant pour protéger la peinture du cadre du vélo et contribuer à son immoblisation .
- la pièce d'emprisonnement emprisonne le cadre grâce à son action conjuguée avec un anti-vol en U standard pour cycles, ou à boucle, ou un cadenas à anse, dont une anse est glissée dans un trou situé à la base de la pièce d'emprisonnement ou autre lieu adéquat puis dans un trou aménagé dans, ou sur le poteau-glissière, sous une barre principale du dit cadre; le tout étant verrouillé par l'usage de la serrure prévue sur les différents types d'anti-vol par le biais d'une clé ou système de même fonction.
- la pièce d'emprisonnement avec l'action conjuguée d'un anti-vol comme décrit ci-dessus empêche l'extraction de la roue arrière ou avant par l'impossibilité de déplacer la bicyclette.

Les dessins annexés illustrent l'invention:

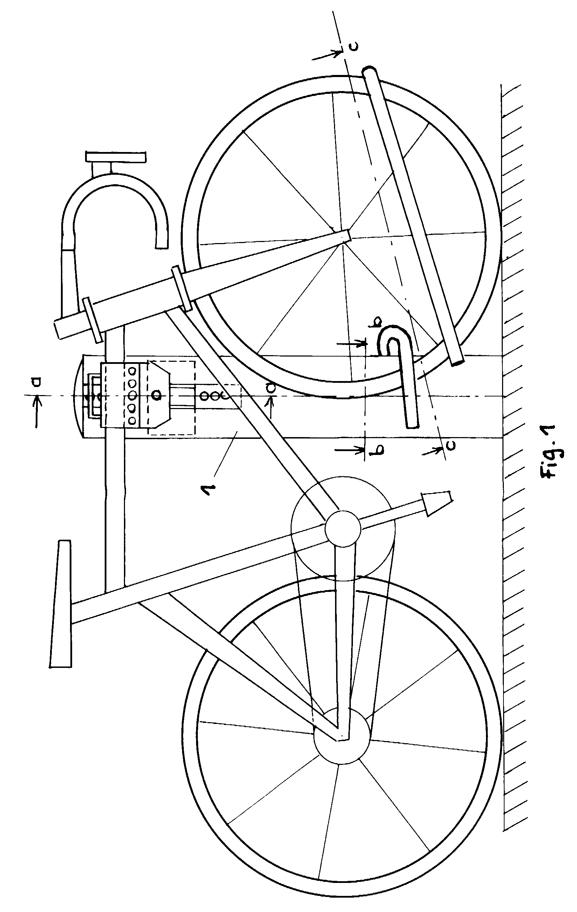

- La figure 1 représente en vue de face, le dispositif selon l'invention,

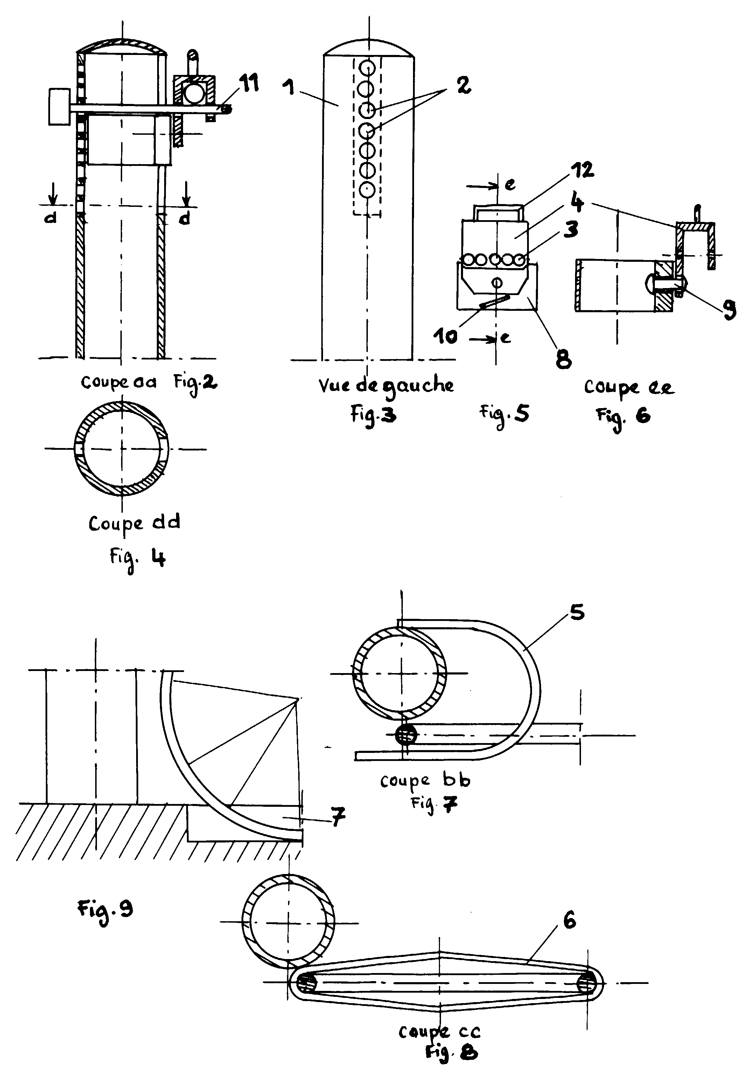

- La figure 2 représente en coupe aa le dispositif d'emprisonnement du cadre,
- La figure 3 représente en vue de gauche le poteau-glissière solidaire du sol,
- La figure 4 représente en coupe dd le poteau-glissière,
- La figure 5 représente en vue de face le bras avec la pièce d'emprisonnement,
- La figure 6 représente en coupe ee la pièce d'emprisonnement,
- La figure 7 représente en coupe bb le poteau , la barre de crochetage avec la roue en position de stationnement,
- La figure 8 représente en coupe cc le poteau, la pièce de forme adaptée avec la roue avant en position de stationnement,
- La figure 9 représente en vue de face le poteau, la saignée dans le sol avec la roue avant en position de stationnement.

En référence à ces dessins, le dispositif comporte un poteau-glissière (1) perforé par une série de trous (2) pour coopérer avec l'un des trous (3) de la pièce d'emprisonnement (4) lors de l'introduction de la anse de l'anti-vol.
Les trous (2) correspondent aux différentes hauteurs de vélos et aux différentes inclinaisons des barres principales du cadre.

Le poteau-glissière (1) fixé sur le sol est ouvert en façade coupe dd pour permettre le coulissement de la pièce d'emprisonnement (4).

La barre de crochetage (5) est fixée sur le poteau-glissière (1), et /ou sur le sol.Elle est ouverte vers l'arrière, fixée à une hauteur du sol qui facilite le placement et le retrait de la roue avant.

La variante de forme adaptée (6) est fixée sur le poteau-glissière(1), et/ou sur le sol, elle est évasée à sa partie centrale pour épouser la forme de la roue dont les rayons divergent vers le moyeu.

La variante en saignée dans le sol (7) doit avoir des dimensions permettant de loger la roue avant, à sa base.

Le bras (8) coulisse dans le poteau-glissière (1), la pièce d'emprisonnement (4) est articulé par rapport au bras (8) sur l'axe (9).
Une butée (10) limite le débattement latéral de la pièce d'emprisonnement (4).
La pièce d'emprisonnement (4) est équipé de trous (3) pour recevoir la anse de l'anti-vol cycle ou du cadenas (11).
Une poignée (12) fixée sur la face supérieure de la pièce (4) facilite sa manoeuvre.

## Revendications

1. Dispositif de maintien d'une bicyclette en stationnement qui emprisonne au moins une roue et le cadre de la bicyclette comprenant un poteau glissière (1) fixé au sol, équipé d'un bras coulissant (8) muni d'une pièce d'emprisonnement de forme adéquate (4) articulée sur un axe (9), la dite pièce (4) emprisonne le cadre du vélo quelle que soit sa hauteur en coiffant une barre principale quelle que soit son inclinaison par l'entremise d'un anti-vol (11), en coopération avec des trous (2) du poteau glissière (1), qui, de plus immobilise le vélo au sol, dans sa position normale de stationnement, empêchant son déplacement en tous sens et en rotation autour de la barre principale du cadre, caractérisé en ce qu'il comporte en outre un moyen d'emprisonnement de la roue avant contribuant également à l'emprisonnement de la roue arrière, en coopération avec le poteau glissière (1), la pièce d'emprisonnement (4) et l'anti-vol (11), l'ensemble contribuant à l'emprisonnement des deux roues même désolidarisées de leur point de fixation, le cadre et les deux roues étant bloqués ensemble par l'immobilisation de la pièce d'emprisonnement (4) par l'unique anti-vol lors d'une seule manipulation.

2. Dispositif selon la revendication 1 caractérisé en ce que le moyen d'emprisonnement de la roue avant est formé d'une barre de crochetage (5).

3. Dispositif selon la revendication 1 caractérisé en ce que le moyen d'emprisonnement de la roue avant est formé d'une pièce de forme adaptée (6).

4. Dispositif selon la revendication 1 caractérisé en ce que le moyen d'emprisonnement de la roue avant est formé d'une saignée dans le sol (7).

5. Dispositif selon la revendication 1 caractérisé en ce que le moyen d'emprisonnement de la roue avant maintient le vélo en stationnement dans la position normale d'usage.

6. Dispositif selon la revendication 1 caractérisé en ce que le moyen d'emprisonnement de la roue avant limite l'inclinaison en rotation bas haut du vélo empêchant l'extraction en tous sens de la roue arrière, même en cas de désolidarisation de la roue avant.

7. Dispositif selon la revendication 1 caractérisé en ce que le poteau glissière (1) empêche l'extraction latérale gauche ou droite et/ou arrière de la roue arrière, selon qu'il est placé à gauche ou à droite du vélo, par le blocage en rotation bas haut de la bicyclette prenant appui sur le dit poteau glissière (1), en cas de désolidarisation de la roue avant.

8. Dispositif selon la revendication 1 caractérisé en ce que la pièce d'emprisonnement (4), montée sur le bras coulissant (8) s'adapte à toutes les hauteurs de vélos.

9. Dispositif selon la revendication 1 caractérisé en ce que la pièce d'emprisonnement (4) articulée sur l'axe (9) s'adapte à toutes les inclinaisons d'une barre principale du cadre.

10. Dispositif selon la revendication 1 caractérisé en ce que la pièce d'emprisonnement (4) emprisonne une barre principale du cadre donc la totalité du cadre du vélo grâce aux trous (3) coopérant avec les trous fixes (2) du poteau glissière (1) dans lesquels on introduit de part en part une anse de l'antivol (11).

11. Dispositif selon la revendication 1 caractérisé en ce que la pièce d'emprisonnement (4) emprisonne la roue arrière et la roue avant en maintenant le vélo au sol par appui sur une barre principale du cadre grâce à son articulation sur l'axe (9) et sa translation par le biais du bras (8); l'immobilisation en position de (4) étant obtenue par l'entremise de l'anti-vol (11) qui relie les trous (3) aux trous fixes (2) du poteau glissière (1).

12. Dispositif selon la revendication 1 caractérisé en ce que la pièce d'emprisonnement (4) équipée de l'anti-vol (11) placé sous la barre emprisonnée du cadre maintient le vélo en position normale lors de la désolidarisation de la roue avant de la fourche.

13. Dispositif selon la revendication 1 caractérisé en ce que la pièce d'emprisonnement (4) positionnée derrière la potence du vélo empêche le déplacement longitudinal du vélo donc l'extraction de la roue avant.

## Patentansprüche

1. Fahrradständer, der zumindest ein Rad und den Rahmen eines Fahrrades blockiert, ausgerüstet mit einem höhenverstellbaren Pfosten (1), der auf dem Boden befestigt ist, mit einem höhenverstellbaren Teil (8), mit einem Sicherheitsbügel in angepasster Form (4), drehbar auf einer Achse (9), wobei der besagte Bügel (4) den Rahmen des Fahrrades unabhängig von dessen Grösse sichert, durch Auflage auf der Hauptstange des Fahrrades unabhängig von deren Steigung, mittels eines Farradschlosses (11), zusammen mit den Öffnungen (2) des Pfostens (1), welcher ausserdem das Fahrrad auf dem Boden immobilisert, in seiner normalen Parkposition, jedwede Bewegung des Fahrrades in alle Richtungen und in Rotation um die Hauptstange verhindernd, ausserdem dadurch gekennzeichnet, dass er als Mittel mit der Sicherung des Vorderrades gleichzeitig die Sicherung des Hinterrades einschliesst, zusammen mit dem Pfosten (1), dem Sicherheitsbügel (4) und dem Fahrradschloss (11), gemeinsam zur Sicherung der beiden Räder beitragend, sogar wenn diese von ihren Fixpunkten losgelöst sind, also sind folglich der Rahmen und die beiden Räder zusammen durch die Immobilisierung des Sicherheitsbügels (4) durch nur ein Fahrradschloss mit nur einem Vorgang blockiert.

2. Fahrradständer nach Anspruch 1, dadurch ausgezeichnet, dass das Mittel zur Sicherung des Vorderrades die Form eines Bügels besitzt (5).

3. Fahrradständer nach Anspruch 1, dadurch ausgezeichnet, dass das Mittel zur Sicherung des Vorderrades eine angepasste Form besitzt (6).

4. Fahrradständer nach Anspruch 1, dadurch ausgezeichnet, dass das Mittel zur Sicherung des Vorderrades die Form eines Loches im Boden in angepasster Form besitzt (7).

5. Fahrradständer nach Anspruch 1, dadurch ausgezeichnet, dass das Mittel zur Sicherung des Vorderrades das geparkte Fahrrad in seiner normalen Gebrauchsposition belässt.

6. Fahrradständer nach Anspruch 1, dadurch ausgezeichnet, dass das Mittel zur Sicherung des Vorderrades die die Anhebung des Fahrrades von unten nach oben begrenzt und die Aushebung in jedem Sinne des Hinterrades verhindert, auch bei Loslösung des Vorderrades von seinem Fixpunkt.

7. Fahrradständer nach Anspruch 1, dadurch ausgezeichnet, dass der Pfosten (1) die seitliche Aushebung des Hinterrades nach links oder rechts oder nach hinten verhindert, egal ob der Pfosten links oder rechts des Fahrrades plaziert ist, durch die Blockierung der Rotation von unten nach oben des Fahrrades, welches an den genannten Pfosten (1) angelehnt ist, sogar wenn das Vorderrad von seinem Fixpunkt losgelöst ist.

8. Fahrradständer nach Anspruch 1, dadurch ausgezeichnet, dass der Sicherheitsbügel (4), welcher auf (8) montiert ist, sich an alle Fahrradhöhen anpassen lässt.

9. Fahrradständer nach Anspruch 1, dadurch ausgezeichnet, dass der Sicherheitsbügel (4), drehbar auf der Achse (9), sich an alle Fahrradrahmen unabhängig von deren Grösse anpassen lässt.

10. Fahrradständer nach Anspruch 1, dadurch ausgezeichnet, dass der Sicherheitsbügel (4) eine Hauptstange des Rahmens sichert, folglich die Gesamtheit des Fahrradrahmens, durch die Öffnungen (3) zusammen mit den feststehenden Öffnungen (2) des Pfostens (1), in welche man einen Teil des Fahrradschlosses einführt (11).

11. Fahrradständer nach Anspruch 1, dadurch ausgezeichnet, dass der Sicherheitsbügel (4) das Vorder- und das Hinterrad sichert, durch das Halten des Fahrrades auf dem Boden durch das Anlehnen einer Hauptstange des Rahmens, durch die Drehbarkeit auf der Achse (9) und die Verstellung des höhenverstellbaren Teils (8); die Immobilisierung in Position (4) wird erreicht durch den Einsatz des Fahrradschlosses (11), der die Öffnungen (3) mit den feststehenden Öffnungen (2) des Pfostens (1) verbindet.

12. Fahrradständer nach Anspruch 1, dadurch ausgezeichnet, dass der Sicherheitsbügel (4), ausgerüstet mit dem Fahrradschloss (11), unter der gesicherten Hauptsstange des Rahmens positioniert, das Fahrrad in seiner normalen Position hält, selbst wenn das Vorderrad von seinem Fixpunkt gelöst wird.

13. Fahrradständer nach Anspruch 1, dadurch ausgezeichnet, dass der Sicherheitsbügel (4), hinter der Lenkerstange des Fahrrades plaziert, die Bewegung des Fahrrades nach vorne und hinten verhindert, also auch die Aushebung des Vorderrades.

## Claims

1. A bicycle parking apparatus which blocks at least one wheel and the bicycle frame including a slide-post (1) fixed to the ground, fitted out with a sliding arm (8) equipped with an appropriately shaped blocking element (4) articulated on an axle(9), the said element (4) blocks the bicycle frame whatever its height capping the main bar whatever its angle by means of an anti-theft device (11), and a series of holes (2) in the slide-post (1) which, in addition fully locks the bicycle on the ground in its normal parking position, prevening any movement or rotation around the main bar of the frame, characterized in that includes more-over a means of blocking of the front wheel contributing to blocking of the rear wheel, as well, working together with the slide-post (1), the blocking element (4) and the theft device (11), the whole enables to lock both wheels even when they are freed from their fixing points, the frame and both wheels are immobilized together by locking of the blocking element (4) with one anti-theft device, which requires only one manipulation.

2. The apparatus in accordance with claim 1 characterized in that the means of locking of the front wheel is a hoocking bar (5).

3. The apparatus in accordance with claim 1 characterized in that the means of locking of the front wheel is an appropriately shaped element (6).

4. The apparatus in acordance with claim 1 characterized in that the means of locking of the front wheel is a groove in the ground (7).

5. The apparatus in accordance with claim 1 characterized in that the means of locking of the front wheel keeps the bicycle parked in its normal position.

6. The apparatus in accordance with claim 1 characterized in that the means of locking of the front wheel limits the angle of the up and down rotation of the bicycle, thus preventing any form of extraction of the rear wheel, even when the front wheel is freed from the fork.

7. The apparatus in accordance with claim 1 characterized in that the slide-post (1) prevents lateral extraction to the right or to the left ( depending on whether it is placed on the right or on the left of the bicycle) and/or backward extraction of the rear wheel by blocking the rotation of the bicycle, leaning on the said slide-post (1), in case the front wheel should be freed from the fork.

8. The apparatus in accordance with claim 1 characterized in that the blocking element (4), fitted on the sliding arm (8) adapts to all heights of bicycles.

9. The apparatus in accordance with claim 1 characterized in that the blocking element (4) articulated on the axle (9) adapts to all the angles of the main bar of the bicycle frame.

10. The apparatus in accordance with claim 1 characterized in that the blocking element (4) fully locks the main bar of the frame and, consequently, the whole of the bicycle frame thanks to the holes (3) which are in contact with the slide-post's (1) holes (2), through which runs the U section of the anti-theft device.

11. The apparatus in accordance with claim 1 characterized in that the blocking element (4) locks the rear wheel and the front wheel by holding the bicycle on the ground, leaning on the main bar of the frame thanks to its articulation on the axle (9), the element 's (4) movement being translated by the arm (8); the immobile position of the (4) is obtained by means of the anti-theft device (11) which links the holes (3) with the holes (2) in the slide-post (1).

12. The apparatus in accordance with claim 1 characterized in that the blocking element (4) equipped with an anti-theft device (11) placed under the fully locked bar of the frame holds the bicycle in its normal position when the front wheel is freed from the fork.

13. The apparatus in accordance with claim 1 characterized in that the blocking element (4) placed behind the headbar prevents longitudinal movement of the bicycle, hence the impossibility of extraction of the front wheel.
